Europäisches Patentamt

European Patent Office

Office européen des brevets

(11) Numéro de publication: **0 443 288 A1**

# DEMANDE DE BREVET EUROPEEN

(21) Numéro de dépôt: 90420576.2

(22) Date de dépôt: 28.12.90

(51) Int. Cl.5: **G05D 1/02**, G01S 1/70,
E02F 3/84

(30) Priorité: **12.01.90 FR 9000532**

(43) Date de publication de la demande:
**28.08.91 Bulletin 91/35**

(84) Etats contractants désignés:
**AT BE CH DE DK ES GB GR IT LI LU NL SE**

(71) Demandeur: **GV SA**
**32 avenue Marcel Cachin**
**F-69120 Vaulx en Velin(FR)**

(72) Inventeur: **Vuagnat, Louis**
**127 Chemin Chantegrillet**
**F-69110 Sainte Foy Les Lyon(FR)**

(74) Mandataire: **Laurent, Michel et al**
**Cabinet LAURENT et CHARRAS, 20, rue Louis**
**Chirpaz B.P. 32**
**F-69131 Ecully Cedex(FR)**

(54) **Dispositif perfectionné d'orientation et de guidage d'engins.**

(57) Dispositif perfectionné d'orientation et de guidage d'engins, notamment de travaux publics, du type comprenant :
- une platine (21) de réglage d'horizontalité ;
- au moins une source laser (25), associée à un premier organe réfléchissant rotatif (38),
- un boîtier (1), contenant la platine (21) et la source laser (25) ;
- au moins un récepteur, susceptible de capter partie du plan laser ainsi défini, solidaire ou non de l'engin,
**caractérisé** en ce que le faisceau laser issu de la source (25) est scindé en deux composantes de direction perpendiculaire, dont l'une est réfléchie sur un second organe réfléchissant rotatif (30) afin de définir le plan vertical centré sur l'axe vertical du boîtier, et dont l'autre est réfléchie dans une direction comprise dans le plan ainsi défini, et qui traverse un ensemble de prismes (33,34,35) dont les caractéristiques optiques et géométriques sont susceptibles d'être modifiées, avant de frapper ledit premier organe réfléchissant rotatif (38) et ce, afin de définir le plan sub-horizontal de travail des engins.

FIG.5

EP 0 443 288 A1

# DISPOSITIF PERFECTIONNE D'ORIENTATION ET DE GUIDAGE D'ENGINS.

La présente invention concerne un dispositif perfectionné pour l'orientation et le guidage d'engins, notamment dans les domaines des travaux publics, agricole, voire même industriel.

A ce jour, il est bien connu notamment dans le domaine des travaux publics, d'utiliser dans le cadre de la mise à niveau du sol, du réglage de la pente d'une tranchée ..., des dispositifs aptes à contrôler en altimétrie les outils mis en oeuvre. Ces dispositifs sont notamment constitués de lasers tournants, emettant dans le domaine visible ou non, associés à des récepteurs appropriés solidaires desdits engins.

Ce type d'appareils, utilisés en général de manière semi-automatique voire automatique, se composent essentiellement d'un émetteur, en l'occurrence le laser proprement dit, monté sur un support et dont la rotation du faisceau définit un plan parallèle à l'état de surface du terrain souhaité. Une partie de ce plan ainsi défini est capté par un récepteur solidaire de l'engin comprenant essentiellement des cellules de réception contenues dans un boîtier solidaire d'un mât télescopique ou non,supportant ledit récepteur. Ce récepteur est avantageusement couplé à un dispositif d'asservissement automatique ou non de l'outil porté par l'engin en référence.

Si certes l'utilisation des lasers tournants a grandement favorisé et contribué à la réalisation de surfaces de caractéristiques définies, il apparait, notamment dans le cadre où ces surfaces doivent respecter des cotes bien déterminées, un certain écart dans les résultats de topographieobtenus par rapport aux surfaces initiales souhaitées. L'origine de cet écart s'explique par le fait que l'axe de référence dit "axe des X" contenu dans le plan laser ne se confond pas avec l'axe de référence ou axe des X du plan-terrain que l'on désire réaliser conforme au projet. En effet, si certes les lasers tournants aujourd'hui disponibles sont relativement bien calés par rapport à l'horizontale du lieu de leur utilisation, notamment au moyen de dispositifs automatiques d'horizontalité, le repérage simultané de l'un des axes de référence, notamment au moyen d'un plan vertical généré par l'émetteur laser n'est pas encore disponible. De fait, il se crée un décalage d'orientation à l'origine, qui ne fait que s'amplifier au cours de l'avancement des travaux.

Les systèmes d'orientation primaires, destinés à permettre un positionnement grossier de l'emetteur laser selon un axe théorique désigné, existant à ce jour sont pour la plupart fixés sur le boîtier contenant les différents mécanismes du laser tournant. Qui plus est, ils sont souvent succincts d'où le manque de rigueur nécessaire pour l'orientation.

Il s'ensuit de manière courante des écarts inacceptables en raison des tolérances d'exécution à respecter. Outre la perte de temps nécessaire pour remodeler et aboutir aux surfaces souhaitées, l'importance de tels écarts induit un surcoût prohibitif pour les sociétés de travaux publics, en raison de l'aspect aléatoire de l'orientation initiale de l'axe des X laser par rapport à l'axe des X projet.

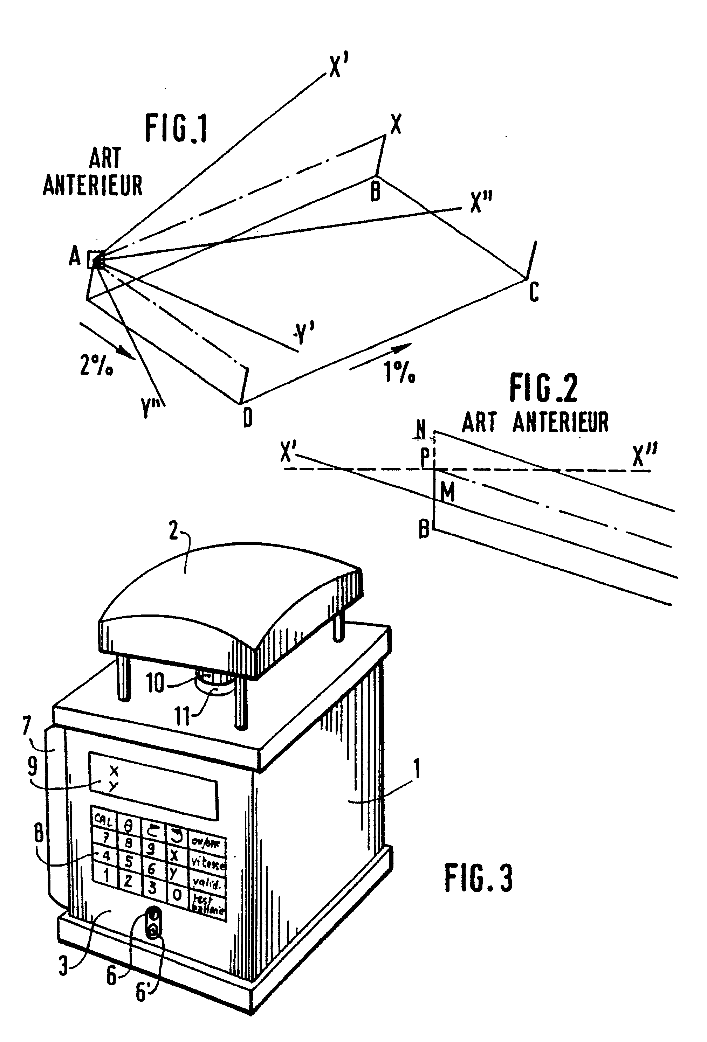

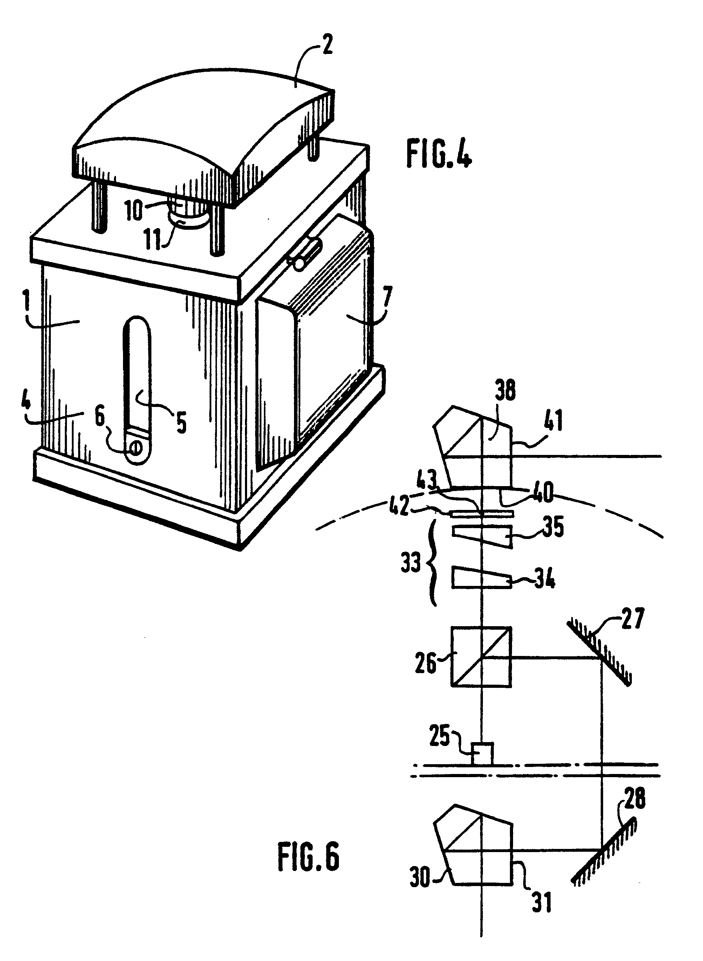

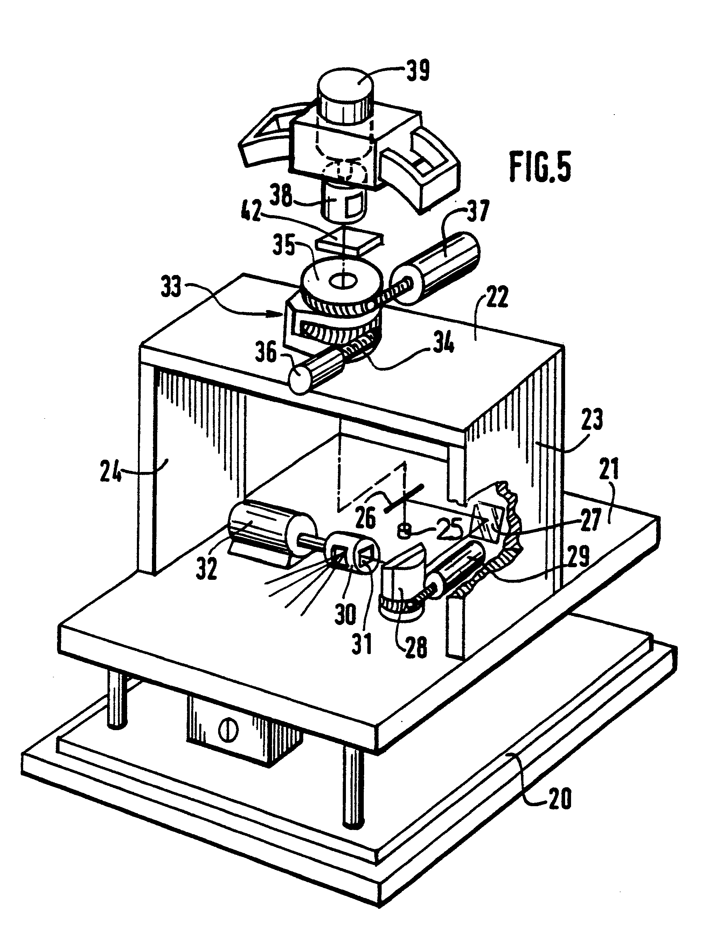

De meilleurs résultats ont été obtenus en utilisant la méthode dite "des trois points". Cette méthode, utilisant des lasers tournants du type en question, va être décrite succintement en liaison avec les figures 1 et 2. Si l'on désire réaliser un plan (ABCD) rectangulaire selon une surface homogène avec des pentes données selon les deux côtés X et Y, avec respectivement, par exemple 1% pour X et 2% pour Y, on place l'émetteur laser sur ou au voisinage de l'un des axes, par exemple l'axe des X dans le prolongement de celui-ci. En général, l'émetteur laser est supporté par un trépied, par exemple en A. Dans ce cas, l'axe des X théorique correspond à l'axe des X du terrain, soit l'axe AB.

Il va de soi que la topographie en matière d'altimétrie et de situation des points A,B,C et D a été préalablement réalisée. De la sorte, on procède préalablement à un ajustage grossier de l'axe des X théorique avec l'axe des X laser, par exemple au moyen d'un collimateur associé à l'émetteur laser, après avoir affiché sur l'émetteur les pentes X et Y "projet" : dans le cas d'espèces, X = 1% ; Y = 2% .

Lorsque l'on affiche la pente, on observe que l'axe des X laser reste différent par rapport à l'axe des X théorique ; il importe donc d'apporter des corrections angulaires. Pour ce faire, on mesure, à l'autre extrémité de l'axe des X terrain, et ce au moyen d'un récepteur monté sur une canne télescopique, la hauteur à l'origine, c'est à dire la distance séparant la position réelle du plan laser en B de la position théorique. Selon que l'axe des X laser est situé d'un côté X' ou de l'autre X" de l'axe des X théorique, son repérage au niveau du récepteur situé en B se situe au dessous en M, respectivement en dessus en N de la hauteur préalablement déterminée par le géomètre, dans le cadre de l'exemple décrit. De la sorte, on ramène le plan laser par petites étapes successives jusqu à obtenir le passage du plan par le point P considéré. Toutefois, il est à noter que chaque mouvement de rotation du boîtier laser situé en A implique un nouveau réglage de l'horizontalité de l'émetteur laser compte tenu de la modification de son assiette. Il s'avère que les dispositifs laser disponibles à ce jour provoquent en général un arrêt immédiat de la tête de rotation dès lors que l'on modifie l'assiette de l'émetteur. Il s'ensuit donc un arrêt du faisceau et donc une perte de temps, et une perte d'informations au point B. Ceci nécessite des moyens de communications radio entre l'opérateur situé en A et celui situé en B.

De manière commode, on vérifie l'exactitude du plan laser avec un autre sondage à l'extrémité du plan, en C par exemple et passant par le point d'émission laser, d'où la dénomination des trois points.

Il s'avère donc que si certes une telle méthode permet d'augmenter de manière significative la précision de la mise en place des plans laser, elle s'avère lourde du point de vue des facteurs humain et matériels et surtout consommatrice de temps.

La présente invention vise à pallier ces inconvénients. Elle propose un dispositif perfectionné d'orientation et de guidage d'engins, notamment de travaux publics, qui soit facile à mettre en oeuvre, particulièrement par tout employé et ouvrier travaillant sur un chantier de travaux publics, souvent peu familiarisés avec les connaissances topographiques, et qui permette d'obtenir des calages de plans laser de travail de grande précision avec rapidité, ne nécessitant pour cela qu'un seul opérateur.

Ce dispositif perfectionné d'orientation et de guidage d'engins, notamment de travaux publics, comprend :

- une platine de réglage d'horizontalité ;
- au moins une source laser, solidaire de la platine, associée à un miroir rotatif, destinée à définir un plan sub-horizontal dont les caractéristiques géométriques d'inclinaison sont préalablement établies ;
- un boîtier, contenant la platine et la source laser ;
- au moins un récepteur, destiné à capter le plan laser ainsi défini, solidaire de l'engin à orienter et guider.

Ce dispositif se <u>caractérise</u> en ce que le faisceau laser issu de la source est scindé en deux composantes de direction perpendiculaire, dont l'une est réfléchie sur un organe réfléchissant rotatif afin de définir le plan vertical centré sur l'axe vertical du boîtier, et dont l'autre est réfléchie dans une direction comprise dans le plan ainsi défini, et qui traverse un ensemble de prismes dont les caractéristiques optiques et géométriques sont susceptibles d'être modifiées, avant de frapper un second organe réfléchissant rotatif et ce, afin de définir le plan sub-horizontal de travail des engins.

En d'autres termes, la présente invention se caractérise en ce que l'origine du plan sub-horizontal de travail des engins est toujours parfaitement et rigoureusement connu et orienté avec l'axe des X théorique du terrain, compte tenu de la mise en oeuvre simultanée d'un plan laser vertical lui-même toujours aligné avec l'axe des X théorique.

Avantageusement, en pratique :

- la première composante du faisceau laser est réfléchie sur deux miroirs successifs solidaires de la platine avant de se réfléchir sur l'organe réfléchissant rotatif ;
- le second miroir fixé sur la platine est mobile en rotation afin de permettre l'ajustement de la direction d'un plan vertical particulier ;
- l'organe réfléchissant rotatif destiné à définir le plan vertical est constitué d'un prisme de section pentagonale, dont deux côtés sont de même longueur et forment un angle de 90°, ledit prisme étant symétrique par rapport à la bissectrice de cet angle ;
- la rotation dudit prisme peut être momentanément stoppée afin de définir un point précis aux cotes déterminées ;
- l'ajustement des coordonnées du plan sub-horizontal est réalisé par un diasporamètre constitué de deux prismes circulaires identiques et concentriques de section trapézoïdale, montés de manière complémentaire l'un par rapport à l'autre, chacun d'eux étant solidaires d'un moteur indépendant assurant leur rotation par rapport à leur axe ;
- la rotation du faisceau laser de la source destinée à définir le plan sub-horizontal est assurée par une tourelle munie d'un prisme de section pentagonale du même type que celui décrit dans le cadre de la réalisation du plan vertical ;
- le diasporamètre est interchangeable, et ce afin d'offrir différents éventails de possibilités dans le cadre des pentes désirées ;
- la tourelle contenant le diasporamètre est fixe par rapport à la platine d'horizontalité ;
- le dispositif comprend en outre une lame de verre à faces parallèles, susceptible de pivoter autour d'un axe horizontal, interposée sur le trajet optique du faisceau laser entre le diasporamètre et le prisme pentagonal de définition du plan sub-horizontal, et éventuellement entre le miroir rotatif et le prisme pentagonal de définition du plan vertical, afin de respectivement recentrer le faisceau laser émergeant du diasporamètre sur l'axe de rotation de la face d'entrée du prisme pentagonal de définition du plan sub-horizontal, et le faisceau laser émergeant du miroir rotatif sur l'axe de rotation de la face d'entrée du prisme pentagonal de définition du plan vertical ;
- le prisme pentagonal de définition du plan sub-horizontal est susceptible de se déplacer sur un arc de cercle dont le centre correspond au centre de la face supérieure du diasporamètre ; pour ce faire, il est monté sur un chariot mobile coulissant sur des rails de guidage décrivant ledit arc de cercle ; le dit chariot est asservi par un moteur, commandé par un micro-ordinateur, en fonction des données entrées par l'opérateur, notamment les pentes du plan sub-horizontal ;

- le prisme pentagonal de définition du plan sub-horizontal est susceptible de recevoir un organe apte à supprimer l'encrassement inhérent notamment aux poussières du lieu de travail, et l'humidité de la face supérieure du diasporamètre ;

- ledit organe est constitué par une turbine munie d'aubes, activée en rotation par le moteur du prisme pentagonal definissant le plan sub-horizontal, et fixée au niveau de la face inférieure de ce prisme ; typiquement, sa vitesse de rotation est comprise entre 350 et 400 tours/minute ;

- le fonctionnement des moteurs du diasporamètre, et des prismes pentagonnaux de la tourelle et du plan vertical sont gérés par un micro-ordinateur situé sur la platine ;

- la platine d'horizontalité est munie d'une lunette topographique d'orientation et d'un fil à plomb optique, destinés à permettre le centrage de l'émetteur sur un repère déterminé au sol.

La manière dont l'invention peut être réalisée et les avantages qui en découlent ressortiront mieux de l'exemple de réalisation qui suit donné à titre indicatif et non limitatif à l'appui des figures annexées.

La figure 1 est une vue perspective sommaire schématique représentant le principe de la méthode des trois points, telle que décrite dans le préambule de la description de la présente invention.

La figure 2 représente le plan vertical passant par les points B et C de la figure 1.

La figure 3 représente une vue schématique en perspective arrière du dispositif conforme à l'invention.

La figure 4 représente une vue schématique en perspective avant du dispositif conforme à l'invention.

La figure 5 est une coupe schématique de l'intérieur du dispositif conforme à l'invention.

La figure 6 est un schéma illustrant le trajet optique du faisceau laser dans le dispositif conforme à l'invention.

Comme on peut le voir sur les figures 3 et 4, le dispositif conforme à l'invention est fondamentalement constitué d'un boîtier (1), par exemple métallique, surmonté d'une coupole (2), destinée à recevoir un moteur de mise en rotation comme il sera décrit ultérieurement. Outre son rôle, cette coupole (2) a également pour but de protéger, notamment contre la poussière et les chocs, l'orifice de sortie (11) du faisceau laser, particulièrement fragile puisqu'il correspond à un prisme aux caractéristiques particulières tel qu'il sera décrit ultérieurement.

Comme on peut le voir, la face arrière (3) du boîtier (1) comporte un clavier, destiné à entrer les différentes caractéristiques du plan sub-horizontal désiré et un écran (9) permettant de visualiser l'affichage des pentes en X et en Y.

Au sein du clavier (8) :

- les touches 0 à 9 sont des touches numériques destinées à permettre l'introduction des pentes et/ou des codes ;

- la touche "on/off" permet la mise en route ou l'arrêt du dispositif ;

- la touche "validation" permet outre la validation des pentes, l'orientation du plan vertical et la validation des codes d'entrée du programme tel qu'il sera décrit ultérieurement ;

- les deux flèches permettent d'une part, la modification de l'orientation du plan vertical, et d'autre part l'orientation du prisme horizontal lorsque la vitesse de rotation du prisme pour le plan sub-horizontal est nulle;

- la touche "vitesse" permet l'affichage de la vitesse de rotation pour le plan sub-horizontal désiré. Elle peut varier de manière discontinue entre 0 et 600 tours/minute par pas de 200 tours ;

- une calibration du dispositif est possible par utilisation de la touche CAL ;

- la touche "test batterie" permet d'afficher le niveau de charge de la batterie ;

- la touche "Θ" permet d'afficher les pentes négatives ;

- et enfin les touches "X" et "Y" permettent de modifier respectivement les pentes en X et en Y.

Il va de soi qu'un plus grand nombre de touches pourrait être prévu, notamment dans le cadre de programmes plus élaborés et plus complexes ou voire dans le cadre d'un guidage directionnel et d'un auto-contrôle.

Comme on peut le voir également sur la figure 3, la face arrière (3) du boîtier (1) comporte également l'orifice de sortie du collimateur (6) solidaire de la platine d'horizontalité (21), et destiné à permettre un premier positionnement grossier du boîtier par rapport à l'axe des X théorique. De même, le fil à plomb optique, également solidaire de la platine (21), et dont on a représenté l'occulaire (6') permet le centrage de l'emetteur sur une référence située au niveau du sol (piquet, clou, marque, etc.).

La figure 4 montre distinctement un bossage (7), destiné à contenir la batterie ou pile afin de permettre un fonctionnement autonome du dispositif conforme à l'invention. La face avant (4) du boîtier (1) comporte une fente prolongée (5), destinée à permettre le passage du faisceau laser tournant pour ainsi définir le plan vertical de référence. On observe au niveau de la base inférieure de cette fente l'orifice d'entrée (6) du collimateur.

Comme on peut le voir sur la figure 5, le boîtier (1) comprend un socle (20) sur lequel est montée de manière non rigide une platine d'horizontalité (21), destinée à se positionner automatiquement selon une position horizontale du lieu considéré et ce, par tout moyen approprié non décrit.

Une source laser, en l'occurrence une diode (25), est solidaire de la platine (21) et est positionnée de telle sorte qu'elle émet un faisceau perpendiculaire à celle-ci, donc vertical. Ce faisceau laser vient frapper un miroir semi-réfléchissant (26) dont la caractéristique essentielle est de très peu absorber le faisceau laser et ce, afin de conserver un maximum de puissance disponible. La partie réfléchie horizontalement par le miroir (26) est réfléchie à son tour sur un miroir fixe (27) solidaire de la platine (21) et dont le plan est situé à 45° par rapport au faisceau laser incident, De la sorte, le faisceau laser réfléchi décrit un angle de 90° par rapport au faisceau laser ainsi réfléchi. Ce faisceau réfléchi vient se réfléchir sur un autre miroir (28) également vertical et également solidaire de la platine (21). Toutefois, le miroir (28) peut pivoter autour de son axe vertical et ce, au moyen d'un moteur (29). En position statique, le plan vertical du miroir (28) forme, avec le faisceau laser incident, un angle de 45° de sorte que le faisceau réfléchi issu du miroir (28) forme un angle de 90° avec le faisceau laser incident. Le faisceau laser ainsi réfléchi pénètre en (31) dans un prisme de section pentagonale (30), mû en rotation au moyen d'un moteur (32). De manière avantageuse, on peut interposer entre le miroir (28) et la face (31) d'entrée du prisme (30), une lame à faces parallèles (non représentée), destinée à permettre un recentrage du faisceau laser sur l'axe de rotation dudit prisme (30). De la sorte, on rectifie les erreurs inhérentes à l'inclinaison du faisceau laser par rapport à la face d'entrée (31) du prisme (30), de sorte que l'on génère toujours un plan vertical parfaitement centré sur l'axe vertical du boîtier.

Le prisme (30) comme déjà dit présente une section pentagonale dont deux côtés consécutifs sont de même longueur et forment un angle de 90°. Ce prisme pentagonal est symétrique par rapport à la bissectrice de cet angle. De fait, le faisceau laser pénétrant en (31) dans le prisme pentagonal (30) pénètre par la face (31) qui constitue l'un des côtés à angle droit. De la sorte, le faisceau laser émergeant du prisme sort avec un angle de 90° par rapport au faisceau pénétrant par la face (31).

Comme déjà dit, le prisme (30) étant mû en rotation par le moteur (32), le faisceau issu du prisme décrit un plan vertical, émergeant du boîtier (1) par la fente (5).

Une seconde composante du faisceau laser traversant le miroir semi-réfléchissant (26) est elle-même réfléchie par deux miroirs-plan parallèles non représentés, dont le plan forme un angle de 45° par rapport au faisceau incident et ce, afin de simplement décaler le faisceau laser émis par la diode tout en le maintenant vertical. Il est à noter qu'on peut tout aussi bien envisager une installation comprenant deux sources laser, une pour chacun des faisceaux laser, en vue de définir les deux plans laser.

Le faisceau laser traverse alors un diasporamètre (33) constitué par deux prismes de section trapézoïdale (34) et (35), circulaires, concentriques, montés de manière complémentaire l'un par rapport à l'autre. Ces deux prismes (34) et (35) sont respectivement mûs en rotation au moyen de moteurs (36) et (37). De la sorte et de manière connue, on peut faire varier le trajet optique du faisceau laser en modifiant les distances parcourues dans chacun des prismes (34) et (35) et dans l'intervalle les séparant.

A l'issue du diasporamètre (33), le faisceau laser traverse une lame de verre à faces parallèles (42) sensiblement perpendiculaire à ce faisceau. Cette lame est susceptible de pivoter sur sa tranche, autour d'un axe horizontal, contenu dans le plan de la dite lame, et représenté par son intersection avec le plan de la figure 6 par un point (43 . Cette lame, compte tenu de son indice de réfraction supérieur à celui de l'air, et de son pivotement autour de l'axe horizontal (43), a pour but de déplacer le faisceau laser issu du diasporamètre (33) parallèlement, et en direction de l'axe de rotation du prisme à section pentagonale (38) décrit ci-après.

En effet, le faisceau laser pénètre dans un prisme de section pentagonale (38) de mêmes caractéristiques que le prisme (30) déjà décrit après avoir traversé ladite lame (42). Il pénètre dans ce dernier par la face (40) constituant l'un des côtés de l'angle droit et ressort de celui-ci à 90° par la face (41). Ce prisme pentagonal (38) est également mû en rotation au moyen d'un moteur (39) situé dans la coupole (2) et permet donc ainsi de définir le plan sub-horizontal.

De manière complémentaire, le prisme à section pentagonale (38) est monté sur un chariot (44), susceptible de se mouvoir sur un segment (45) d'arc de cercle, sous l'action d'un moteur approprié, voire d'un dispositif éléctro-magnétique Ce cercle a pour centre le centre géométrique de la face supérieure du prisme (35) du diasporamètre (33). De fait, le prisme (38) et son moteur de mise en rotation (39) est déplacé, par le biais du chariot (44), d'un angle correspondant à la valeur de l'angle de plus grande pente, dépendant des pentes en X et Y introduites par l'opérateur, comme il sera décrit ultérieurement. Ce déplacement de l'axe de rotation du prisme pentagonale (38) permet d'accroître la précision de la pente du plan sub-horizontal en permettant au faisceau émergeant du diasporamètre puis de la lame à faces parallèles (42) de pénétrer dans ledit prisme (38) perpendiculairement à la face (40) et selon son axe de rotation.

Les caractéristiques des pentes du plan sub-horizontal, définissant le plan laser de référence pour les engins, sont déterminées au moyen des prismes (34) et (35) du diasporamètre. De fait, les moteurs (36) et (37) ainsi que les moteurs (29), (32) et (39) sont gérés par un micro-ordinateur non représenté, les pentes respectives en X et en Y étant comme déjà dit introduites par le clavier de même que la vitesse de rotation des prismes à section pentagonale (30) et (38).

Il va être décrit plus en détail le mode de fonctionnement du dispositif conforme à l'invention. Il va de soi qu'une reconnaissance topographique préalable a été réalisée avec mise en place de repères avec la rigueur nécessaire tant au niveau de l'altimétrie que de la situation géométrique. On place le dispositif émetteur au niveau du point A, par exemple sur la figure 1. Le centrage sur A peut être effectué par exemple au moyen d'un fil à plomb optique, solidaire de la platine d'horizontalité (21) puis, on pré-oriente le boîtier, avec sa fente de sortie (5) en direction du point B et ce, grossièrement au moyen du collimateur (6). Une fois la stabilisation horizontale obtenue par l'intermédiaire de la platine (21), le plan laser vertical est activé ; de fait, le plan vertical contient l'axe des X laser. On cherche à obtenir une superposition de l'axe des X laser avec l'axe des X du terrain qui correspond à l'axe des X de la surface à réaliser. De fait, l'utilisateur confond l'axe des X laser avec l'axe des X du terrain par orientation (rotation autour de l'axe vertical de l'émetteur de ce plan vertical). Cette orientation est obtenue par asservissement du miroir vertical (28) provoquant un léger décalement du plan vertical laser. Lorsque ce plan vertical est aligné sur B, ce résultant étant observé au moyen d'un récepteur placé en B, on introduit en X et en Y les pentes désirées. Le microprocesseur calcule trois valeurs à savoir :

- la première, la valeur de la composante des pentes X et Y souhaitées, dite "droite de plus grande pente" ;

- la seconde, la valeur de l'angle $\beta$ de rotation définissant la direction de la droite de plus grande pente par rapport à l'axe X laser, et donc l'angle $\Theta$ dont il faudra faire tourner symétriquement les deux prismes (34) et (35) du diasporamètre (33) afin d'obtenir cette pente ;

- la troisième, correspond à l'angle de pivotement de la lame de recentrage (42) du faisceau emergeant du diasporamètre (33) sur l'axe du prisme pentagonal (38) de définition du plan sub-horizontal ; le dit prisme pentagonal monté sur son chariot (44) est également incliné d'un angle de même valeur par rapport à la verticale du lieu.

L'axe monopente, c'est-à-dire l'axe de symétrie des prismes, tourne d'un angle $\beta$, chacun des prismes du diasporamètre tournant en sens inverse de l'angle $\Theta$.

De fait, le fonctionnement du moteur de rotation du chariot (44) sur le segment (45), ainsi que du moteur de pivotement de la lame de verre à faces parallèles (42) sont également gérés par le micro-ordinateur (non représenté) qui gère les autres moteurs d'activation.

De la sorte, le plan laser est ainsi défini. Par acquis de conscience, un contrôle au point C est effectué. De manière générale, il s'avère inutile.

Il ressort de la présente invention un gain de temps et une précision considérablement accrue par rapport aux dispositifs connus à ce jour. De la sorte, un tel dispositif engendre une substantielle économie tout en accroissant la précision des travaux obtenus.

Compte tenu des précisions nécessaires, notamment à très grande distance de l'émetteur, une grande précision est associée au moteur.

Par exemple, lorsque l'on désire une valeur de plus grande pente de 0,001 %, il est nécessaire d'obtenir une variation de l'angle $\Theta$ de 21 secondes d'arc. De la sorte, un rapide calcul montre que pour un codeur fonctionnant sur un tour et ce pour 90° de rotation d'un prisme, il faudrait un nombre de points considérable. De la sorte, on utilise des démultiplicateurs associés aux codeurs eux-mêmes en relation avec les moteurs, permettant ainsi d'assurer la précision voulue.

## Revendications

1. Dispositif perfectionné d'orientation et de guidage d'engins, notamment de travaux publics, du type comprenant :

   - une platine (21) de réglage d'horizontalité ;

   - au moins une source laser (25) solidaire de la platine (21), associée à un premier organe réfléchissant rotatif (38), destinée à définir un plan sub-horizontal de travail dont les caractéristiques géométriques d'inclinaison sont préalablement établies ;

- un boîtier (1), contenant la platine (21) et la source laser (25) ;
- au moins un récepteur, susceptible de capter partie du plan laser ainsi défini, solidaire ou non de l'engin,

  **caractérisé** en ce que le faisceau laser issu de la source (25) est scindé en deux composantes de direction perpendiculaire, dont l'une est réfléchie sur un second organe réfléchissant rotatif (30) afin de définir le plan vertical centré sur l'axe vertical du boîtier, et dont l'autre est réfléchie dans une direction comprise dans le plan ainsi défini, et qui traverse un ensemble de prismes (33,34,35) dont les caractéristiques optiques et géométriques sont susceptibles d'être modifiées, avant de frapper ledit premier organe réfléchissant rotatif (38) et ce, afin de définir le plan sub-horizontal de travail des engins.

2. Dispositif selon la revendication 1, caractérisé en ce qu'il comprend deux sources laser (25), émettant les deux faisceaux lasers perpendiculaires à l'origine des deux plans lasers de travail, respectivement le plan vertical centré sur l'axe vertical du boîtier, et le plan sub-horizontal.

3. Dispositif selon l'une des revendications 1 et 2, caractérisé en ce que la première composante du faisceau laser est réfléchie sur deux miroirs (27,28) successifs, solidaires de la platine (21) avant de se réfléchir sur le second organe réfléchissant rotatif (30).

4. Dispositif selon l'une des revendications 1 à 3, caractérisé en ce que le second miroir (28) est mobile en rotation, afin de permettre l'ajustement de la direction du plan vertical.

5. Dispositif selon l'une des revendications 1 à 4, caractérisé en ce que le premier (30) et le second (38) organe réfléchissant rotatif sont constitués d'un prisme à section pentagonale dont deux côtés consécutifs sont de même longueur et forment un angle de 90°, ledit prisme étant symétrique par rapport à la bissectrice de cet angle.

6. Dispositif selon l'une des revendications 1 à 5, caractérisé en ce que les prismes d'ajustement (34) et (35) des coordonnees du plan sub-horizontal de travail constituent un diasporamètre (33) et sont de forme circulaire identique et concentrique montés de manière complémentaire l'un par rapport à l'autre, susceptibles de subir une rotation autour de leur axe de révolution, chacun d'entre eux étant asservi par un moteur indépendant assurant leur rotation par rapport audit axe.

7. Dispositif selon l'une des revendications 1 à 6, caractérisé en ce qu'il comprend en outre une lame de verre à faces parallèles (42), susceptible de pivoter autour d'un axe horizontal (43), interposée sur le trajet optique du faisceau laser entre le disporamètre (33) et le prisme pentagonal (38) de définition du plan sub-horizontal,et/ou interposée sur le trajet optique du faisceau laser entre le miroir (28) et le prisme pentagonal (30) de définition du plan vertical, destinée respectivement à recentrer le faisceau laser émergeant du disporamètre (33) sur l'axe de rotation de la face d'entrée (40) dudit prisme pentagonal (38), et à recentrer le faisceau laser émergeant du miroir (28) sur l'axe de rotation de la face d'entrée (31) dudit prisme pentagonal (30).

8. Dispositif selon la revendication 7, caractérisé en ce que le prisme pentagonal (38) de définition du plan sub-horizontal est solidaire d'un chariot (44) mobile coulissant sur un segment (45) en arc de cercle dont le centre correspond au centre de la face supérieure du diasporamètre (33) ledit chariot étant mû au moyen d'un moteur approprié.

9. Dispositif selon l'une des revendications 6 à 8, caractérisé en ce que le diasporamètre (33) est interchangeable.

10. Dispositif selon l'une des revendications 1 à 9, caractérisé en ce que le prisme à section pentagonale (38) est susceptible de recevoir un organe apte à supprimer l'encrassement et l'humidité de la face supérieure du diasporamètre (33) ledit organe étant constitué par une turbine munie d'aubes, activée en rotation par le moteur de mise en rotation du prisme à section pentagonale (38), et fixée au niveau de la face inférieure dudit prisme (38).

11. Dispositif selon l'une des revendications 1 à 10, caractérisé en ce que le fonctionnement des moteurs (36, 37), (29), (32) et (39) respectivement du diasporamètre (33,34,35), du miroir (28), des prismes pentagonaux (30), (38) ainsi que de la lame à faces parallèles (42) et le chariot (44) sont gérés par un micro-ordinateur.

FIG.1
ART ANTERIEUR

FIG.2
ART ANTERIEUR

FIG.3

FIG.4

FIG.6

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 145 565   (SYNDICAT NATIONAL DES ENTREPRISES DE DRAINAGE) <br> * abrégé; revendication 1; figures 1-5 * | 1 | G 05 D 1/02 <br> G 01 S 1/70 <br> E 02 F 3/84 |
| A | WO-A-8 911 107   (GV SA) <br> * page 2, lignes 12 - 20; figures 1-3 * | 1 | |
| A | FR-A-2 541 853   (J. DAUDIN ET AL.) <br> * page 8, ligne 14 - page 20, ligne 20; figures 1-8 * | 1 | |
| A | PATENT ABSTRACTS OF JAPAN vol. 8, no. 60 (P-262)(1497) 22 mars 1984, <br> & JP-A-58 211215 (KUBOTA TEKKO K.K.) 8 décembre 1983, <br> * le document en entier * | 1 | |
| A | EP-A-0 296 016   (COMMISSARIAT A L'ENERGIE ATOMIQUE) <br> * abrégé; revendications 1-6; figures 1, 2 * | 1 | |
| A | EP-A-0 170 363   (IMPERIAL CHEMICAL INDUSTRIES PLC) <br> * abrégé; figure 1 * | 1 | DOMAINES TECHNIQUES RECHERCHES (Int. Cl.5) |
| P,A | EP-A-0 369 694   (SPECTRA-PHYSICS INC.) <br> * abrégé; revendication 1; figure 1 * | 1 | G 05 D <br> G 01 S <br> E 02 F |

Le présent rapport de recherche a été établi pour toutes les revendications

| Lieu de la recherche | Date d'achèvement de la recherche | Examinateur |
|---|---|---|
| La Haye | 26 mars 91 | HELOT H.V. |